# EUROPEAN PATENT APPLICATION

(11) **EP 4 475 159 A1**
(43) Date of publication of application: **11.12.2024**
(21) Application number: 22924805.9
(22) Date of filing: 03.02.2022
(51) Int. Cl.: H01H 9/54, H01H 33/59

(54) **SWITCHING DEVICE AND CONTROL METHOD FOR SWITCHING DEVICE**

(71) Applicant: MITSUBISHI ELECTRIC CORPORATION, Chiyoda-ku Tokyo 100-8310 (JP)
(72) Inventor: WATANABE, Shinya, Tokyo 100-8310 (JP); OKUBO, Takuya, Tokyo 100-8310 (JP); ABE, Tatsuhiro, Tokyo 100-8310 (JP); KOYANAGI, Kimiyuki, Tokyo 100-8310 (JP); HORINOUCHI, Katsuhiko, Tokyo 100-8310 (JP); EDO, Takahiro, Tokyo 100-8310 (JP)
(74) Representative: Meissner Bolte Partnerschaft mbB
(86) International application number: PCT/JP2022/004303
(87) International publication number: WO 2023/148895

(57) **Abstract**

A switch unit (20) is connected between a first node (N1) electrically connected to a power source and a second node (N2) electrically connected to a load circuit which receives power supplied from the power source. As a current suppression element (30), a current limiting electrical resistance (31) is connected to the switch unit (20) in parallel. A fault sensing unit (40) senses abnormality in an electrically conducting circuit formed by electrically interconnecting the first node and the second node (N2). When a closing operation of a switchgear (10c) is performed, a switching command unit (25) conducts an abnormality diagnosis based on an output of the fault sensing unit (40) in a first state in which the switch unit (20) is controlled so that an impedance between the first node (N1) and the second node (N2) has a first value, and when no abnormal state is sensed in the abnormality diagnosis, the switching command unit controls the switch unit (20) to establish a second state in which the impedance is equal to or smaller than the first value.

## Description

### TECHNICAL FIELD

The present disclosure relates to a switchgear and a method for controlling the switchgear.

### BACKGROUND ART

Electrical contacts, semiconductor switches, and the like are used as switching elements for closing and opening an electric circuit. Japanese Utility Model Application Laying-Open No. 05-078146 (PTL 1) discloses a current limiting circuit breaker in a configuration with a high-speed switch and a circuit breaker connected in series, and a semiconductor switch and a current limiting resistor connected to the high speed switch in parallel.

In a normal state, the current limiting circuit breaker of PTL 1 passes a large current by the high-speed switch, which is composed of a mechanical contact, whereas when a short circuit fault occurs, and an abnormality is sensed by a current transformer, the current limiting circuit breaker has the semiconductor switch turned on and subsequently the mechanical contact opened to commutate a short circuit current to the semiconductor switch and thus quickly extinguish an arc.

Furthermore, by turning off the semiconductor switch after the commutation to the semiconductor switch is completed, the short circuit current can be further commutated to the current limiting resistor without arcing. Thus, the current limiting circuit breaker of the PTL 1 can quickly extinguish an arc without requiring a special commutation mechanism, and can safely open an electric circuit.

### CITATION LIST

### PATENT LITERATURE

PTL 1: Japanese Utility Model Application Laying-Open No. 05-078146

### SUMMARY OF INVENTION

### TECHNICAL PROBLEM

As described above, the current limiting circuit breaker of PTL 1 can implement a safe circuit when a short circuit fault occurs in an electric circuit from a normal closed state. Meanwhile, when a switchgear is used to interconnect a power source and an electric circuit, that is, when a closing operation is performed from an open circuit state to a closed circuit state, and an abnormality such as a short circuit state has already occurred in a circuit to be connected, there is a concern that a switching element may be damaged as a large current is generated at the same time as the circuit is closed. However, PTL 1 does not specifically describe control applied when the closing operation is performed.

Meanwhile, in order to ensure resistance against a case in which a short circuit current is generated at the same time as a circuit is closed, as described above, the switch and the semiconductor switch may be increased in current-carrying capacity, or a plurality of switches and a plurality of semiconductor switches may be provided in parallel and the circuit breaker may be increased in interrupting capacity or introduction capacity. However, such an approach may invite an increase in size and cost of the switchgear.

The present disclosure has been made to solve such a problem, and an object of the present disclosure is to provide a switchgear and a method for controlling the switchgear capable of preventing generation of an excessive current and damage to a component when a closing operation is performed even while a circuit in which an abnormality such as a short circuit has occurred is closed.

### SOLUTION TO PROBLEM

According to an aspect of the present disclosure, a switchgear is provided. The switchgear comprises a switch unit, a current suppression element, and a switching command unit to control opening/closing the switch unit. The switch unit is connected between a first node electrically connected to a power source and a second node electrically connected to a load circuit which receives power supplied from the power source. The current suppression element is connected between the first node and the second node in parallel to the switch unit. A fault sensing unit senses an abnormality in an electrically conducting circuit which is formed by electrically interconnecting the first node and the second node and includes the power source and the load circuit. When a closing operation of the switchgear is performed, the switching command unit controls the switch unit to establish a first state in which an impedance between the first node and the second node has a first value, and the switching command unit conducts an abnormality diagnosis based on an output of the fault sensing unit. When no abnormal state is sensed by the fault sensing unit in the abnormality diagnosis, the switching command unit controls the switch unit to establish a second state in which the impedance has a second value equal to or smaller than the first value.

According to another aspect of the present disclosure, a method for controlling a switchgear is provided. A method for controlling a switchgear disposed between a first node electrically connected to a power source and a second node electrically connected to a load circuit which receives power supplied from the power source, comprises: when a closing operation of the switchgear is performed, controlling a switch unit connected between the first node and the second node in parallel to a current suppression element to establish a first state in which an impedance between the first node and the second node has a first value; conducting an abnormality diagnosis in the first state to sense an abnormal state in an electrically conducting circuit which is formed by electrically interconnecting the first node and the second node and includes the power source and the load circuit; when the abnormal state is not sensed in the abnormality diagnosis, controlling the switch unit to establish a second state in which the impedance has a second value equal to or smaller than the first value; and when the abnormal state is sensed in the abnormality diagnosis, opening the switch unit.

### ADVANTAGEOUS EFFECTS OF INVENTION

According to the present disclosure, only when an abnormality diagnosis conducted in a state (i.e., a first state) in which an impedance between the first node and the second node is higher than that in a steady closed state (i.e., a second state) provides a normal diagnosis, the switch unit is controlled to establish the steady closed state between the first node and the second node, and generation of an excessive current and damage to a component can also be prevented when a circuit in which an abnormality such as a short circuit has occurred is closed.

### BRIEF DESCRIPTION OF DRAWINGS

Fig. 1 is a conceptual circuit diagram illustrating a configuration example of a switchgear according to a first embodiment.
Fig. 2 is a waveform diagram illustrating a control operation in a closing operation of the switchgear according to the first embodiment.
Fig. 3 is a flowchart of a first example of a control process when the closing operation of the switchgear is performed according to the first embodiment.
Fig. 4 is a flowchart of a second example of the control process when the closing operation of the switchgear is performed according to the first embodiment.
Fig. 5 is a cross section illustrating a modified example of a commutation switching unit.
Fig. 6 is a conceptual circuit diagram illustrating a configuration example of a switchgear according to a modified example of the first embodiment.
Fig. 7 is a conceptual circuit diagram illustrating a configuration example of a switchgear according to a second embodiment.
Fig. 8 is a flowchart of an example of a control process when a closing operation of the switchgear is performed according to the second embodiment.
Fig. 9A is a conceptual cross section illustrating a configuration of a switching command unit and an operation thereof for a low current according to a third embodiment.
Fig. 9B is a conceptual cross section illustrating the configuration of the switching command unit and an operation thereof within a reference current range according to the third embodiment.
Fig. 9C is a conceptual cross section illustrating the configuration of the switching command unit and an operation thereof for an overcurrent according to the third embodiment.
Fig. 10 is a conceptual circuit diagram illustrating a configuration example of a switchgear according to a fourth embodiment.
Fig. 11 is a conceptual circuit diagram illustrating a configuration example of a switchgear according to a fifth embodiment.
Fig. 12 is a flowchart of an example of a control process when a closing operation of the switchgear is performed according to the fifth embodiment.
Fig. 13 is an example of an operation waveform diagram of a semiconductor switch in the switchgear according to the fifth embodiment.

### DESCRIPTION OF EMBODIMENTS

Hereinafter, embodiments of the present disclosure will be described in detail with reference to the accompanying drawings. In the following description, identical or corresponding components in the drawings are identically denoted and in principle will not be described repeatedly.

### First Embodiment

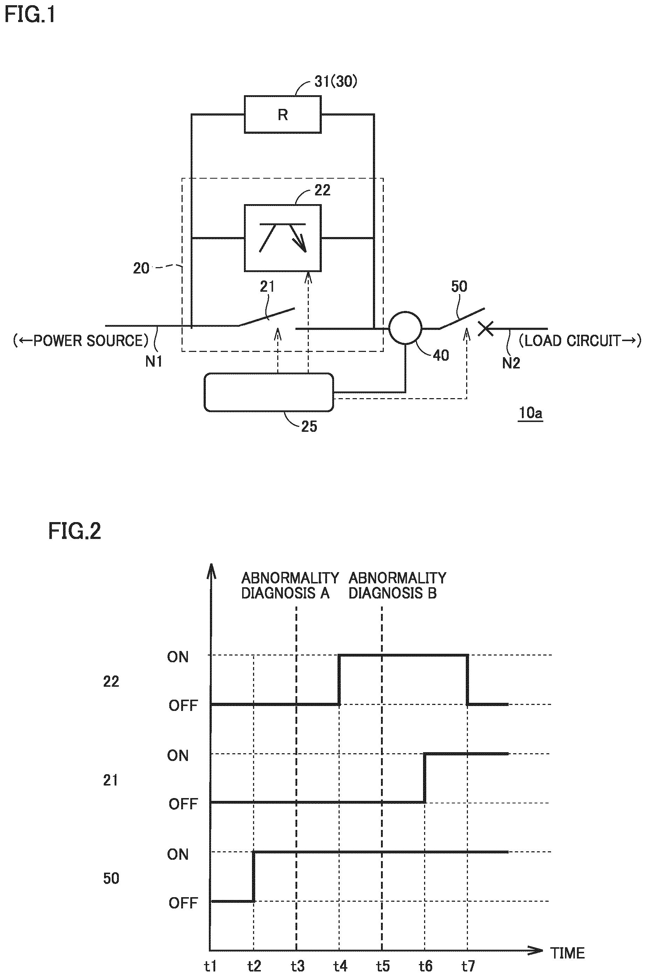

Fig. 1 is a conceptual circuit diagram illustrating a configuration example of a switchgear 10a according to a first embodiment.

Referring to Fig. 1, switchgear 10a comprises a switch unit 20, a switching command unit 25, an electrical resistance 31 as a current suppression element 30, a fault sensing unit 40, and a current switching unit 50.

Switch unit 20 and current switching unit 50 are connected in series between nodes N1 and N2, and control a connection state between nodes N1 and N2 in response to a command issued from switching command unit 25.

Node N1 is electrically connected to a power source (not shown). Node N2 is electrically connected to a load circuit (not shown) which receives power supplied from the power source. That is, in the first embodiment, current switching unit 50 is connected between switch unit 20 and node N2. Nodes N1 and N2 correspond to one embodiment of a "first node" and a "second node," respectively.

Switch unit 20 includes an electrical contact 21 and a commutation switching unit 22 connected in parallel. Electrical contact 21 and commutation switching unit 22 are opened or closed by switching command unit 25. Switching command unit 25 can be constituted for example by a microcomputer in which a program is implemented for performing a control process described later.

Electrical contact 21 is disposed to form a steady current path and accordingly, configured with low impedance. For example, electrical contact 21 is configured to be mechanically opened and closed depending on whether electromagnetic force is present or absent. Commutation switching unit 22 is disposed to operate when a fault occurs, and is typically composed of a semiconductor switch. As will be described later as a modified example, commutation switching unit 22 may be configured with a contact.

While electrical contact 21 has a current-carrying capacity corresponding to feeding power to the load circuit (not shown), the electrical contact basically does not require an interrupting capacity. In contrast, commutation switching unit 22 is configured to have a smaller current-carrying capacity and a larger interrupting capacity than electrical contact 21. An impedance of electrical contact 21 turned on is equal to or smaller than an impedance of commutation switching unit 22 turned on.

Current switching unit 50 is composed of a circuit breaker or a switch capable of interrupting a fault current. Current switching unit 50 requires a current-carrying capacity equivalent to that of electrical contact 21. Generally, a switch has a capability of interrupting an overcurrent of several to less than ten times a rated current, and a circuit breaker also has a capability of interrupting a short circuit current of ten or more times the rated current. Accordingly, as current switching unit 50, the circuit breaker or the switch can be selected to correspond to the magnitude of the fault current assumed to be interrupted.

When nodes N1 and N2 are electrically interconnected, fault sensing unit 40 senses an abnormality in an electrically conducting circuit including the power source (not shown) connected to node N1 and the load circuit (not shown) electrically connected to node N2. An abnormality diagnosis is conducted according to an output of fault sensing unit 40, i.e., whether an abnormal state is sensed or not.

Fault sensing unit 40 senses an abnormal state (or a fault), which is typically an overcurrent caused by a short circuit, based on an electrical signal reflecting measurement information, such as a current, a voltage, an electrical resistance determined by a ratio of the voltage to the current, or temperature elevation, obtained at a predetermined location in the electrically conducting circuit. Alternatively, fault sensing unit 40 may sense an abnormal state based on a distribution of frequency components (or a frequency spectrum) of the electrical signal.

When an abnormality occurs in the circuit, a change in a circuit characteristic, such as an increase of a current, occurs, and fault sensing unit 40 can sense an abnormal state by measuring the change in the current. Further, when a short circuit occurs, voltage or electrical resistance decreases at the short-circuited location. Accordingly, fault sensing unit 40 can also sense an abnormal state by measuring voltage or electrical resistance.

Alternatively, abnormal heat generation may occur in the electrically conducting circuit, and fault sensing unit 40 can also sense an abnormal state by measuring elevation in temperature. Further, when an abnormality accompanied by an electric discharge occurs, an electric discharge noise superimposed in the electrical signal phenomenally occurs, or light emission accompanying the electric discharge occurs. Accordingly, fault sensing unit 40 can also sense an abnormality by measuring a frequency component of the electrical signal or optical information according to the light emission.

The optical information may typically be a value in intensity of light emission measured with an image sensor. Alternatively, in order to avoid erroneous sensing, a value in intensity of light of a specific wavelength that is obtained through an optical filter or a spectrometer can be used as the optical information.

Fault sensing unit 40 can also sense an abnormal state by a combination of a plurality of pieces of the measurement information described above. In that case, it is possible to improve sensing accuracy and also determine the type of the abnormality.

Fault sensing unit 40 can sense an abnormal state by comparing the electrical signal, a component of a specific frequency of the electrical signal, and the optical information with a preset reference range. Alternatively, the reference range can be set based on measurement information learned during a normal operation.

Typically, measurement information such as the electrical signal in a normal state can be collected as a normal value and statistical processing according to a distribution of the normal value can be done to set a reference range used for abnormality diagnosis. For example, a 3σ range of the collected normal value can be set as the reference range, and an abnormal state can be sensed when the measurement information such as the electrical signal deviates from the reference range.

Alternatively, when an abnormal state is sensed using a plurality of types of pieces of measurement information, a pattern or range of a distribution (two-dimensional, three-dimensional, or four or more-dimensional) of the normal value collected as described above is learned, and when a correlation coefficient of data patterns between measurement information obtained in an abnormality diagnosis (an actual value) and a normal value (a learned value) is equal to or smaller than a predetermined reference value, an abnormal state can be sensed.

Setting the reference range by such learning allows the reference range to be appropriately modified even when the load circuit is updated or the like.

Fig. 2 is a waveform diagram illustrating a control operation performed when switchgear 10a according to the first embodiment shifts from the open state to the closed state, i.e., when the closing operation is performed.

Referring to Fig. 2, at time 11, switchgear 10a has electrical contact 21, commutation switching unit 22, and current switching unit 50 all turned off. When an instruction is issued to switchgear 10a for the closing operation, switching command unit 25 initially at time t2 keeps electrical contact 21 and commutation switching unit 22 turned off and turns on current switching unit 50. Thus, in Fig. 1, a current path is formed between nodes N1 and N2 via electrical resistance 31 and current switching unit 50. In that state, at time t3, an abnormality diagnosis A is performed based on an output of fault sensing unit 40.

When no abnormal state is sensed in abnormality diagnosis A, then, at time t4, switching command unit 25 keeps electrical contact 21 turned off and furthermore, turns on commutation switching unit 22. In that state, at time t5, an abnormality diagnosis B is performed based on an output of fault sensing unit 40. When no abnormal state is sensed in abnormality diagnosis B, switching command unit 25 further turns on electrical contact 21 at time t6.

Further, at time t7, switching command unit 25 may turn off commutation switching unit 22 while keeping electrical contact 21 turned on. For example, when commutation switching unit 22 is composed of a semiconductor switch, it is preferable to turn off commutation switching unit 22 at time t7. As a steady closed state after a normal closing operation, a current path is formed between nodes N1 and N2 by electrical contact 21 of low impedance and current switching unit 50 turned on. In contrast, when commutation switching unit 22 is configured to have a contact, i.e., to include an electrical contact, commutation switching unit 22 may be kept turned on at time t7 et seq. Further, commutation switching unit 22 composed of a semiconductor switch can also be kept turned on at time t7. In any case, in the steady closed state, a current path is formed between nodes N1 and N2 with electrical contact 21 turned on. When an overcurrent occurs from the steady closed state, current switching unit 50 can be opened to interrupt a fault current.

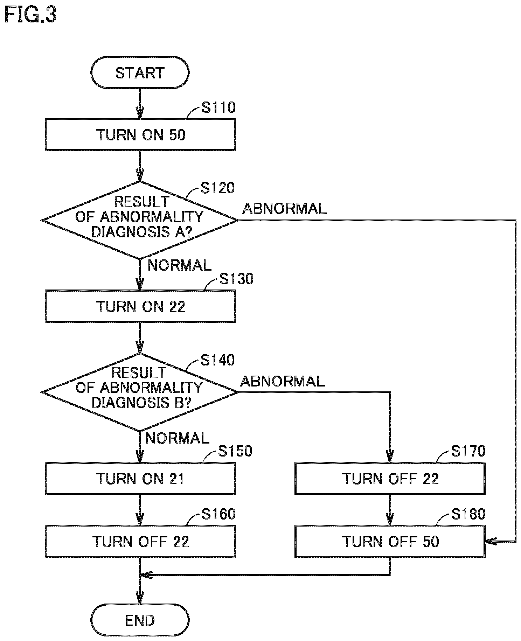

Fig. 3 is a flowchart of the control process for the closing operation represented in Fig. 2. The Fig. 3 control process is performed, for example by switching command unit 25, when switchgear 10a is instructed to perform the closing operation.

Referring to Fig. 3, switching command unit 25 turns on current switching unit 50 in step (hereinafter simply referred to as "S") 110. The step of S110 is performed at time t2 in Fig. 2. Thus, in switchgear 10a (Fig. 1), a current path is formed between nodes N1 and N2 via current switching unit 50 turned on and electrical resistance 31. This establishes a "first state" between nodes N1 and N2. That is, in the control process of Fig. 3, a "first value" of an impedance between nodes N1 and N2 corresponds to a sum of an on-resistance of current switching unit 50 and electrical resistance 31.

From this state, switching command unit 25 in S120 conducts abnormality diagnosis A in the same manner as time t3 in Fig. 2. That is, in S120, whether an abnormal state is sensed is determined based on an output of fault sensing unit 40. When an abnormal state is sensed, the process proceeds to S180 to turn off current switching unit 50 turned on in S110. It is easy to interrupt a current passing through current switching unit 50 as the current is limited by electrical resistance 31. Since an abnormal state has occurred, the closing operation is terminated in a state in which current switching unit 50, as well as electrical contact 21 and commutation switching unit 22 constituting switch unit 20, are turned off.

In contrast, when no abnormal state is sensed in the determination (or abnormality diagnosis A) in S120, then, in S130, switching command unit 25 turns on commutation switching unit 22 while keeping electrical contact 21 turned off in the same manner as time t4 in Fig. 2. As a result, in switchgear 10a (Fig. 1), with commutation switching unit 22 having an on-resistance significantly smaller than the value in resistance of electrical resistance 31, a current path is formed between nodes N1 and N2 via current switching unit 50 turned on and commutation switching unit 22 turned on.

From this state, switching command unit 25 in S140 conducts abnormality diagnosis B in the same manner as time t5 in Fig. 2. In S140 as well, whether an abnormal state is sensed is determined based on an output of fault sensing unit 40. When an abnormal state is sensed, the process proceeds to S170 and S180. Switching command unit 25 in S170 turns off commutation switching unit 22 turned on in S130, and in S180 turns off current switching unit 50 turned on in S110, as described above. Thus, when an abnormality occurs, the closing operation is terminated in a state in which current switching unit 50, as well as electrical contact 21 and commutation switching unit 22 constituting switch unit 20, are turned off. The steps of S170 and S180 may be performed concurrently, or S180 may be performed first.

Depending on the type of the fault caused in the electrically conducting circuit, in a case with a fault current passing through electrical resistance 31, a change in information sensed by fault sensing unit 40 may be reduced to be small. In abnormality diagnosis B performed with commutation switching unit 22 turned on, an effect of electrical resistance 31 on a fault current is reduced, and an abnormality which cannot be sensed in abnormality diagnosis A can also be sensed. In particular, when commutation switching unit 22 is composed of a semiconductor switch, it can be turned off before a current significantly increases, and the electrically conducting circuit can also be opened without generating an arc when an abnormality occurs.

In contrast, when no abnormal state is sensed in the determination in S140 (or abnormality diagnosis B), switching command unit 25 further turns on electrical contact 21 in S150 in the same manner as time t6 in Fig. 2. Thereafter, in S160, switching command unit 25 turns off commutation switching unit 22 in the same manner as time t7 in Fig. 2. Thus, switchgear 10a can form a current path of low impedance between nodes N1 and N2 by electrical contact 21 and current switching unit 50 in the steady closed state after the closing operation. As described above, the step of S160 of turning off the commutation switching unit may be omitted.

In this way, when no abnormal state is sensed in abnormality diagnosis A and abnormality diagnosis B, a "second state" is established between nodes N1 and N2. That is, in the Fig. 3 control process, a "second value" of the impedance between nodes N1 and N2 corresponds to a sum of a value in on-resistance of current switching unit 50 and a value in on-resistance of electrical contact 21 or a sum of the value in on-resistance of current switching unit 50 and a value in resistance obtained by connecting the value in on-resistance of electrical contact 21 and that in on-resistance of commutation switching unit 22 connected in in parallel. That is, in the second state, the impedance between nodes N1 and N2 is equal to or smaller than the impedance in the first state. Furthermore, in the second state, the constituent elements of switch unit 20 have their on/off states changed from those in the first state.

In the first embodiment, as current switching unit 50 is disposed, it is also possible to configure switch unit 20 using only one of electrical contact 21 and commutation switching unit 22.

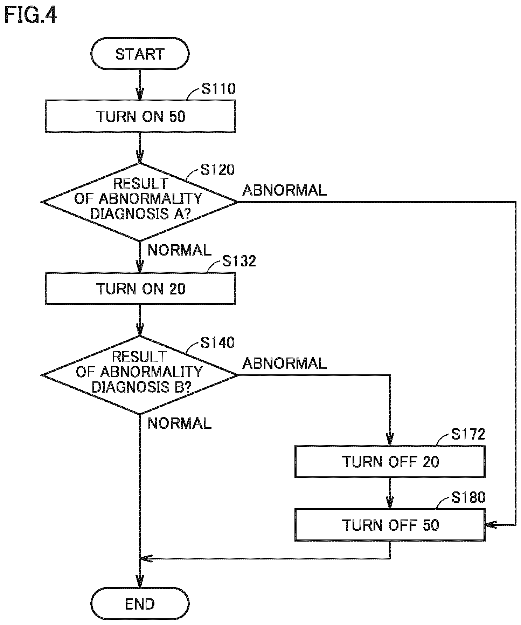

Fig. 4 is a flowchart of a control process for a closing operation in a case with switch unit 20 composed of only one of electrical contact 21 and commutation switching unit 22. The control process shown in Fig. 4 is also performed, for example by switching command unit 25, when switchgear 10a is instructed to perform the closing operation.

Referring to Fig. 4, when switching command unit 25 turns on current switching unit 50 in S110 similar to that in Fig. 3, switching command unit 25 conducts abnormality diagnosis A based on an output of fault sensing unit 40 in S120 similar to that in Fig. 3. When an abnormal state is sensed in abnormality diagnosis A, the process proceeds to S180. In S180, current switching unit 50 turned on in S110 is turned off and thus interrupts a fault current limited by electrical resistance 31, and the closing operation is terminated in a state in which current switching unit 50 and electrical contact 21 or commutation switching unit 22 constituting switch unit 20 are both turned off.

That is, the Fig. 4 control process also establishes the "first state" between nodes N1 and N2 by turning on current switching unit 50. That is, the "first value" of the impedance between nodes N1 and N2 corresponds to a sum of the on-resistance of current switching unit 50 and electrical resistance 31.

In contrast, when no abnormal state is sensed in the determination in S120 (or abnormality diagnosis A), switching command unit 25 turns on electrical contact 21 or commutation switching unit 22 constituting switch unit 20 in S 132. Thereby, in switchgear 10a (Fig. 1), a current path is formed between nodes N1 and N2 via current switching unit 50 turned on and switch unit 20 (electrical contact 21 or commutation switching unit 22) turned on.

From this state, switching command unit 25 conducts abnormality diagnosis B based on an output of fault sensing unit 40 in S140 similar to that in Fig. 3, and when an abnormal state is sensed, the process proceeds to S172 and S180. In S172, switching command unit 25 turns off electrical contact 21 or commutation switching unit 22 (i.e., switch unit 20) turned on in S 132, and in S 180, turns off current switching unit 50 turned on in S 110, as described above. Thus, when an abnormality occurs, the closing operation is terminated with current switching unit 50 and switch unit 20 both turned off. In a manner similar to that in Fig. 2, the steps of S 170 and S 180 may be performed concurrently, or S 180 may be performed first. When switch unit 20 is composed of electrical contact 21 alone, it is preferable to perform S 180 first to turn off current switching unit 50 before electrical contact 21 in view of prevention of arcing.

When no abnormal state is sensed in the determination in S140 (or abnormality diagnosis B), switching command unit 25 maintains the state in abnormality diagnosis B, that is, a state with current switching unit 50 and switch unit 20 (electrical contact 21 or commutation switching unit 22) turned on. As a result, switchgear 10a forms a steady closed state after a closing operation. This establishes the "second state" between nodes N1 and N2. That is, the "second value" of the impedance between nodes N1 and N2 corresponds to a sum of the on-resistance of current switching unit 50 and the on-resistance of switch unit 20 (electrical contact 21 or commutation switching unit 22).

Thus, in the switchgear according to the present embodiment, in a closing operation, an abnormality diagnosis is conducted while a plurality of switching elements are controlled so that an impedance between nodes N1 and N2 establishes a state higher than that in a steady closed state, and when no abnormality is sensed in the abnormality diagnosis, the plurality of switching elements are controlled to establish the steady closed state by the plurality of switching elements. This can also prevent an excessive current from being generated and a component from being damaged when a circuit in which an abnormality such as a short circuit has occurred is closed.

In particular, in switchgear 10a according to the first embodiment, a current limiting effect can be obtained by initially forming a path via electrical resistance 31, and even when an electric circuit in which an abnormality such as a short circuit has occurred is closed, an open circuit by current switching unit 50 can be implemented in response to sensing of an abnormal state without generating an excessive current.

Further, in the configuration with switch unit 20 including electrical contact 21 and commutation switching unit 22 connected in parallel, the order shown in Fig. 2 can be followed to control opening/closing electrical contact 21 and commutation switching unit 22 to utilize an interrupting capacity of commutation switching unit 22 in an abnormality diagnosis (or abnormality diagnosis B) using switch unit 20 and utilize a low impedance characteristic of electrical contact 21 in the steady closed state.

Further, depending on the type of the load circuit, an abnormal state may be sensed in a time-limited manner as a current increases only at the time of activation, that is, only for some period of time immediately after an electric circuit is closed, or the like. For example, when a motor or a similar load which varies in impedance or reactance after it is activated and the power source are interconnected by the switchgear, there may be a large starting current flowing only immediately after a circuit is closed. In order to handle such a case, for abnormality diagnosis A (S120 in Figs. 3 and 4), an output of fault sensing unit 40 may be monitored for a predetermined waiting period of time, and, depending on whether an abnormal state is sensed after the waiting period of time has elapsed, current switching unit 50 and switch unit 20 may be controlled to be opened/closed to determine branching to S180 or S130 (S132). This allows the closing operation of the switchgear to be performed without determining that the starting current is abnormal.

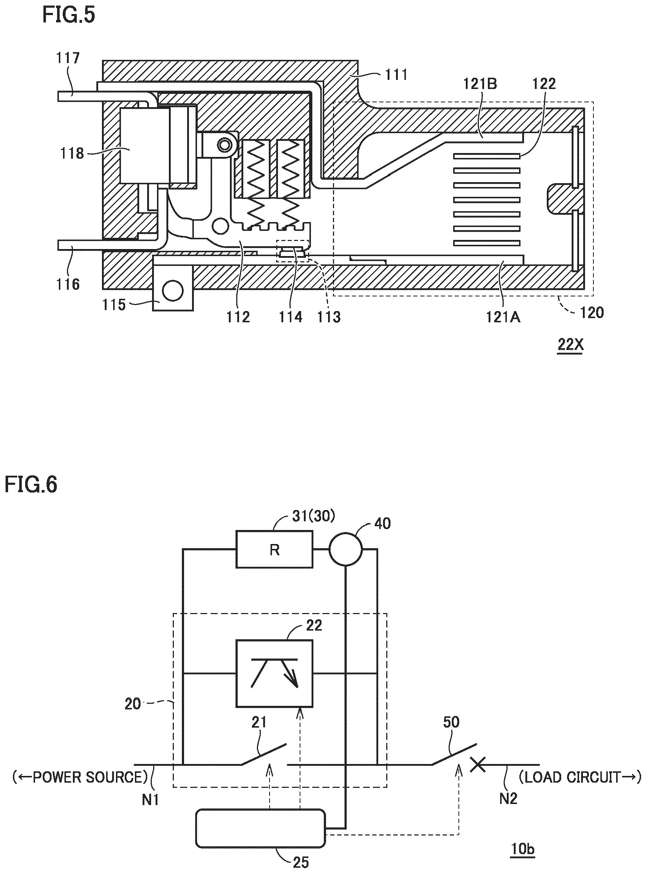

While commutation switching unit 22 shown in Fig. 1 may be composed of a semiconductor switch as described above, the commutation switching unit can also be composed of a combination of an electrical contact having a high melting point and an arc chute, as shown in Fig. 5.

Referring to Fig. 5, a commutation switching unit 22X according to a modified example includes a heat-resistant contact 114 and an arc chute 120 accommodated in a casing 111. Heat-resistant contact 114 is formed of a material (e.g., tungsten, or a nickel alloy or the like) having a higher melting point than silver and copper. In contrast, electrical contact 21 can be formed of silver, copper, or an alloy thereof, which is a representative material of low electrical resistivity.

Casing 111 accommodates a movable electrode 112, a fixed electrode 113, and an electrode operating unit 118 for opening and closing heat-resistant contact 114. Further, terminals 115 to 117 electrically contactable from outside of casing 111 are disposed. Terminal 115 corresponds to a terminal of commutation switching unit 22 in Fig. 1 closer to the power source. Terminals 116 and 117 are terminals of commutation switching unit 22 in Fig. 1 closer to the load, and terminal 116 is connected to fault sensing unit 40 and terminal 117 is connected to electrical resistance 31.

Arc chute 120 includes a pair of arc runners 121A and 121B and an arc extinguishing unit 122 as a mechanical mechanism for extinguishing an arc generated when heat-resistant contact 114 is turned on/off.

When a large current is introduced from terminal 115 to commutation switching unit 22, the current generates electromagnetic force, which separates movable electrode 112 from fixed electrode 113 automatically. When movable electrode 112 is separated, an arc is generated between the electrodes, and the arc is driven toward arc chute 120 by an effect of a magnetic field from the electrodes.

After the arc is driven in this way, the arc is commutated to arc runner 121B, and a current flows toward the load circuit through arc runner 121B, electrode operating unit 118, and terminal 116. When this is done, electrode operating unit 118 operates to maintain the separation of movable electrode 112 by electromagnetic force.

After the arc is driven between arc runners 121A and 121B in this way, an effect of an electric discharge resistance of the arc causes the current to start to shift from terminal 116 (or fault sensing unit 40) toward terminal 117 (or electrical resistance 31), and the current is completely commutated such that a current flows through electrical resistance 31 as time elapses. When this is done, the current having passed through electrical resistance 31 comes to flow toward the load circuit via terminal 117, electrode operating unit 118, and terminal 116. Thus, when a large current passes, the current can be suppressed, and after that, commutation switching unit 22 can be opened (or turned off).

For commutation switching unit 22X shown in Fig. 5, the principle of the above operation will be followed to determine abnormality based on the magnitude of the current passing through movable electrode 112 or fixed electrode 113. That is, when a current of a predetermined magnitude or larger flows, commutation switching unit 22X determines that the current is abnormal and automatically performs a turning-off operation.

Further, commutation switching unit 22X can be manually turned on/off when it is connected to an external circuit (not shown). In other words, connecting the external circuit to terminal 116 and terminal 117 and passing an electric current allow electrode operating unit 118 to be used to control opening/closing the movable electrode. For example, in step S130 of Fig. 3 and step S172 of Fig. 4, passing a current through electrode operating unit 118 using such an external circuit can provide a trigger to turn on commutation switching unit 22X.

In this way, commutation switching unit 22X shown in Fig. 5 including arc chute 120 allowing an arc discharge to be high in resistance ensures an interrupting capacity when an abnormal state is sensed in abnormality diagnosis B. Thus, when opening/closing is controlled as shown in Figs. 3 and 4, an operation of turning off commutation switching unit 22 in S170 or S172 can be implemented.

For switchgear 10a shown in Fig. 1, fault sensing unit 40 is disposed closer to the load (that is, node N2) than switch unit 20 is. When this is compared with a configuration with fault sensing unit 40 disposed closer to the power source (that is, node N1) than switch unit 20 is, the former allows fault sensing unit 40 to exhibit a change in an electrical signal, such as voltage, current, and electrical resistance, to be larger than the latter. This helps sensing an abnormal state in an abnormality diagnosis.

Alternatively, as shown in Fig. 6, fault sensing unit 40 may be relocated from the location thereof shown in Fig. 1.

Referring to Fig. 6, a switchgear 10b according to a modified example of the first embodiment has fault sensing unit 40 connected to electrical resistance 31 on a side of electrical resistance 31 closer to the load circuit (or node N2) and also connected to switch unit 20 in parallel.

In switchgear 10b according to the modified example, fault sensing unit 40 can sense an abnormal state based on the above-described electrical signal such as voltage, current, electrical resistance and the like, and in addition, an amount of elevation in temperature of electrical resistance 31 or an amount of energy absorbed by electrical resistance 31 as indicated by a cumulative value of the square of a passing current. As a result, opening/closing can be controlled as shown in Fig. 3 or Fig. 4 so as to prevent a failure caused by a melting loss or the like of electrical resistance 31.

### Second Embodiment

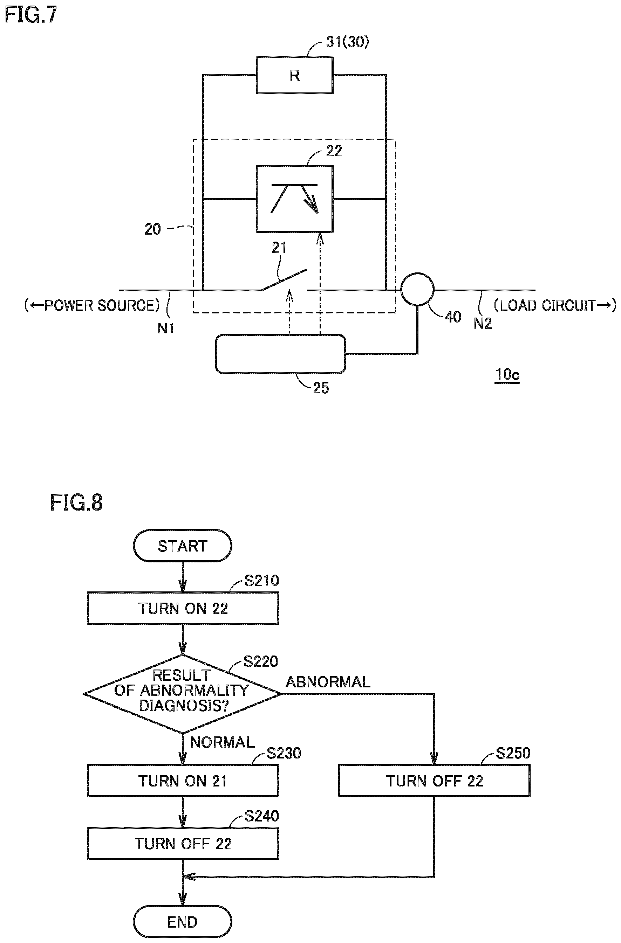

Fig. 7 is a conceptual circuit diagram illustrating a configuration example of a switchgear 10c according to a second embodiment.

Referring to Fig. 7, switchgear 10c comprises switch unit 20, switching command unit 25, electrical resistance 31 as current suppression element 30, and fault sensing unit 40. Switch unit 20 includes electrical contact 21 and commutation switching unit 22 similar to the first embodiment, connected in parallel. Electrical contact 21 and commutation switching unit 22 are turned on or off by switching command unit 25. When switchgear 10a (Fig. 1) according to the first embodiment is compared with switchgear 10c according to the second embodiment it is understood that the former is configured to further comprise current switching unit 50 between switch unit 20 and node N2.

Since switchgear 10c according to the second embodiment does not comprise current switching unit 50, switch unit 20 is not composed of only one of electrical contact 21 and commutation switching unit 22, and instead composed of electrical contact 21 and commutation switching unit 22 connected in parallel.

Fig. 8 is a flowchart of a control process for a closing operation by the switchgear according to the second embodiment. The Fig. 8 control process is performed, for example by switching command unit 25, when switchgear 10c is instructed to perform the closing operation.

Referring to Fig. 8, switching command unit 25 in S210 turns on commutation switching unit 22 while keeping electrical contact 21 turned off. This establishes the "first state" between nodes N1 and N2. That is, in the control process of Fig. 8, the "first value" of the impedance between nodes N1 and N2 corresponds to the on-resistance of commutation switching unit 22.

In S220, switching command unit 25 conducts an abnormality diagnosis in this state. That is, in S220, whether an abnormal state is sensed is determined based on an output of fault sensing unit 40. Note that in S220 as well, as done in S120 (see Fig. 3 and Fig. 4) in the first embodiment, determination of abnormality/normality may be branched depending on whether an abnormal state is sensed after a predetermined waiting period of time has elapsed.

When an abnormal state is sensed, the process proceeds to S250 to turn off commutation switching unit 22 turned on in S210. Thus, in contrast to electrical contact 21, commutation switching unit 22 is configured to have some extent of interrupting capacity. This allows a fault current to be interrupted in response to sensing of an abnormal state before a current immediately after commutation switching unit 22 is turned on fully rises. Since the abnormal state has occurred, the closing operation is terminated in a state with electrical contact 21 and commutation switching unit 22 both turned off.

In contrast, when no abnormal state is sensed in the determination in S220 (or an abnormality diagnosis), switching command unit 25 further turns on electrical contact 21 in S230. Further, switching command unit 25 turns off commutation switching unit 22 in S240. The step of S240 may be omitted as done in S160 (Fig. 3).

In this way, switchgear 10c can form a current path having a low impedance and a large current-carrying capacity between nodes N1 and N2 by electrical contact 21 in the steady closed state after the closing operation. This establishes the "second state" between nodes N1 and N2. That is, in the control process of Fig. 8, the "second value" of the impedance between nodes N1 and N2 corresponds to a value in on-resistance of electrical contact 21, or a value in resistance obtained by connecting the on-resistance of electrical contact 21 and that of commutation switching unit 22 in parallel.

Thus, switchgear 10c according to the second embodiment has a minimum configuration, that is, switchgear 10a according to the first embodiment minus current switching unit 50. In switchgear 10c, a current path is formed by electrical resistance 31 when switch unit 20 is open. Therefore, although switchgear 10c alone does not have a circuit breaking function, a current passing through switchgear 10b (electrical resistance 31) can be suppressed even when a fault such as a short circuit occurs in the load circuit connected to node N2, and switchgear 10c thus has a current limiting function.

Further, when switch unit 20 performs the closing operation, switchgear 10c conducts an abnormality diagnosis with commutation switching unit 22 alone turned on, and when no abnormality is sensed in the abnormality diagnosis, a steady closed state with electrical contact 21 turned on is established. When an overcurrent is generated by a fault in response to the closing by switch unit 20, commutation switching unit 22 can be turned off to interrupt a fault current. After the interruption, a current passing through switchgear 10c is suppressed by a current limiting effect of electrical resistance 31.

Further, in the second embodiment, fault sensing unit 40 can be configured to sense abnormality when a current passing through its location deviates from a predetermined reference current range. In this case, when the current passing through fault sensing unit 40 is smaller or larger than the reference current range, switching command unit 25 operates to open switch unit 20, i.e., to turn off both electrical contact 21 and commutation switching unit 22.

In this case, when the power source is not connected to node N1, and the current of fault sensing unit 40 is zero, and smaller than the reference current range, no instruction is issued to perform the closing operation, and the step of S210 et seq. will not be initiated. And when the power source and the load circuit (not shown) are connected to nodes N1 and N2, respectively, and a passing current within the reference current range passes through fault sensing unit 40, a state with an instruction issued to perform an opening operation is established and the step of S210 et seq. are initiated. Then, in the abnormality diagnosis in S220, when the passing current at fault sensing unit 40 is larger than the reference current range, an abnormal state is sensed and the opening/closing control described above can be implemented.

### Third Embodiment

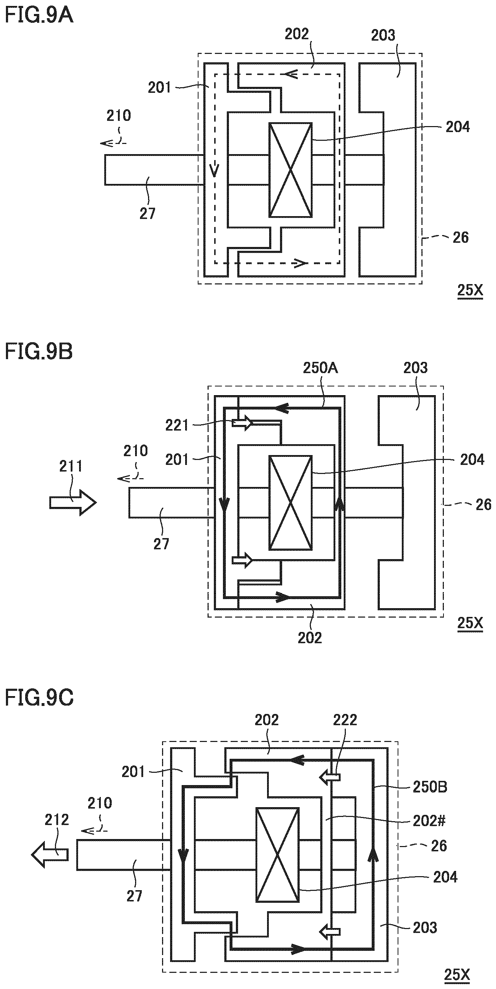

In a third embodiment, a modified example of switching command unit 25 for switch unit 20 in the first and second embodiments will be described with reference to Figs. 9A to 9C. A switching command unit 25X according to the third embodiment also has the function of fault sensing unit 40, and has a mechanism for automatically controlling electrical contact 21 to be turned on/off in accordance with a passing current at fault sensing unit 40 in the first and second embodiments.

Specifically, switching command unit 25 according to the third embodiment turns on electrical contact 21 when the passing current at fault sensing unit 40 falls within a predetermined reference current range, and the switching command unit turns off electrical contact 21 when the passing current is smaller than the reference current range (or for a small current) and larger than the reference current range (or for an overcurrent).

Fig. 9A shows a state of switching command unit 25X when a current smaller than the reference current range passes through a coil 204, that is, for a small current.

Referring to Fig. 9A, switching command unit 25X according to the third embodiment includes an electromagnet 26 composed of iron cores 201 to 203 and a current carrying conductor (or a coil) 204, and a coupling rod 27. Iron cores 201 and 203 are opposed to each other with iron core 203 interposed therebetween. Further, in the state shown in Fig. 9A, iron cores 201 to 203 are disposed such that iron cores 201 and 202 form a gap therebetween and so do iron cores 202 and 203.

Iron cores 201 and 202 are each electrically connected to a respective one of first and second contacts (not shown) constituting electrical contact 21. When iron cores 201 and 202 are brought into contact, the first and second contacts are closed together, whereas when a gap is formed between iron cores 201 and 202, the first and second contacts are also opened apart. Coil 204 is disposed such that a current similar to that of fault sensing unit 40 passes therethrough.

Coupling rod 27 passes through a hole (not shown) formed in iron core 202, which is fixed, to integrally couple iron cores 201 and 203. That is, iron cores 201 and 203 are configured to be integrally movable with respect to the fixed iron core 202 in response to electromagnetic force generated by the current passing through coil 204.

When no current passes through coil 204, a biasing force 210 caused by a spring or the like (not shown) acts on coupling rod 27 to form a gap between iron cores 201 and 202 and a gap between iron cores 202 and 203. For a small current, although a magnetic path is formed as indicated in Fig. 9A by a dotted line, the magnetic path has a small magnetic force, and no magnetic force (or an attractive force) is generated to eliminate the gap. As a result, the gap between iron cores 201 and 202 is maintained, and an open state is also maintained between the first and second contacts connected to nodes N1 and N2, respectively. That is, electrical contact 21 is turned off.

Fig. 9B shows a state of switching command unit 25X when the current passing through coil 204 is smaller than the reference current range, that is, for a small current.

As shown in Fig. 9B, when the current passing through coil 204 is larger than that in the state shown in Fig. 9A, a magnetic path 250A passing through iron cores 201 and 202 is formed. Magnetic path 250A generates electromagnetic force, which in turn generates an attractive force 221 of movable iron core 201 with respect to fixed iron core 202. This causes a driving force 211 in the right direction in Fig. 9A, which exceeds biasing force 210 in Fig. 9A, to act on coupling rod 27 connected to iron cores 201 and 203. This eliminates the gap between iron cores 201 and 202 and brings iron cores 201 and 202 into contact with each other to close the first contact and the second contact together. That is, electrical contact 21 is turned on.

Fig. 9C shows a state of switching command unit 25X when the current passing through coil 204 is larger than the reference current range, that is, for an overcurrent.

As shown in Fig. 9C, iron core 202 is provided with a thin-walled portion 202# smaller in cross section than another portion of the iron core, and magnetic saturation occurs in thin-walled portion 202# when magnetic path 250A has a magnetic flux density increasing as a current of coil 204 increases from the state shown in Fig. 9B.

As shown in Fig. 9C, when such magnetic saturation occurs, a magnetic path 250B is formed through iron cores 201 to 203 so as to avoid thin-walled portion 202# increased in magnetic resistance. By the formation of magnetic path 250B, an attractive force 222 of movable iron core 203 is generated on fixed iron core 202. This causes a driving force 212 in the same direction (the left direction in the figure) as biasing force 210 in Fig. 9A to act on coupling rod 27 connected to iron cores 201 and 203. As a result, the gap between iron cores 202 and 203 is eliminated, while a gap is formed between iron cores 201 and 202, which opens the first contact and the second contact apart. That is, electrical contact 21 is turned off.

In Figs. 9A and 9B, iron core 201 corresponds to one embodiment of a "first iron core," iron core 202 corresponds to a "second iron core," and iron core 203 corresponds to a "third iron core." Driving force 211 and magnetic path 250A shown in Fig. 9B correspond to a "first driving force" and a "first magnetic path," respectively, and driving force 212 and magnetic path 250B shown in Fig. 9C correspond to a "second driving force" and a "second magnetic path," respectively.

The switching command unit of the third embodiment controls electrical contact 21 turned off to be turned on when a current passing through the switchgear rises from zero and enters a predetermined reference current range, and when the electrical contact is thus turned on and an excessive current is generated due to a fault such as a short circuit in the load circuit, electrical contact 21 can be automatically turned off. That is, the switching command unit of the third embodiment allows the abnormality diagnosis during the closing operation of the switchgear described in the first and second embodiments to be implemented by a hardware mechanism by controlling electrical contact 21 to be turned on/off without communicating a control signal.

Switching command unit 25X according to the third embodiment is applied to controlling turning on/off electrical contact 21 connected to commutation switching unit 22 in parallel and configuring switch unit 20. That is, for commutation switching unit 22, a switching command unit is provided for controlling turning on/off commutation switching unit 22 in the same manner as the first and second embodiments, and turning on/off electrical contact 21 can be automatically controlled by an operation of switching command unit 25 with commutation switching unit 22 turned on.

Thus, even in a configuration in which turning on/off electrical contact 21 is automatically controlled by switching command unit 25X according to the third embodiment, an abnormality diagnosis is conducted with commutation switching unit 22 turned on in switch unit 20 in the closing operation, and after that, electrical contact 21 can be turned on in the steady closed state, similarly as described in the first and second embodiments.

### Fourth Embodiment

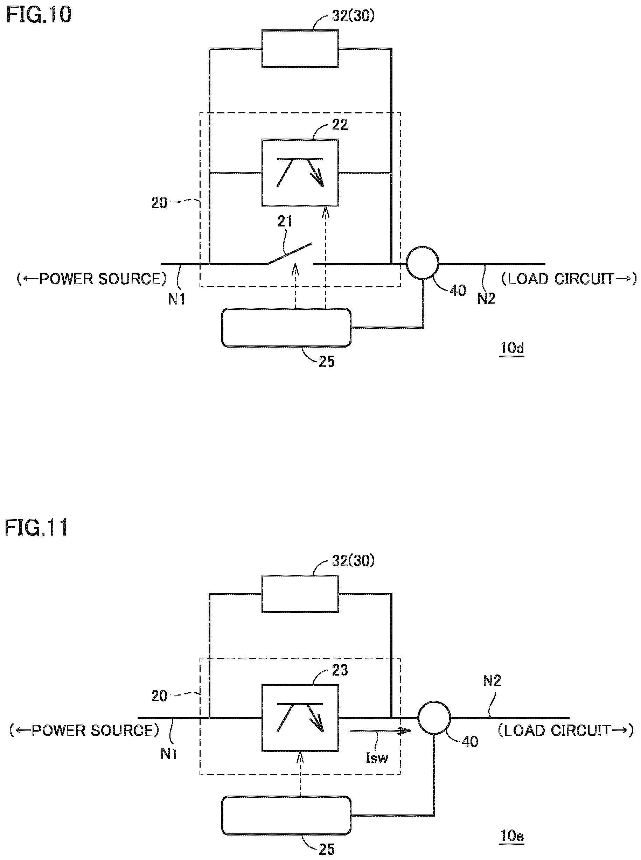

Fig. 10 is a conceptual circuit diagram illustrating a configuration example of a switchgear 10d according to a fourth embodiment.

Referring to Fig. 10, switchgear 10d comprises switch unit 20, switching command unit 25, an energy absorbing element 32 as current suppression element 30, and fault sensing unit 40. Switch unit 20 includes electrical contact 21 and commutation switching unit 22 similar to the first embodiment, connected in parallel. Electrical contact 21 and commutation switching unit 22 are turned on/off by switching command unit 25.

Similarly as has been described in the first and second embodiments, commutation switching unit 22 can be composed of a semiconductor switch or an electrical contact (for example, see Fig. 5). Further, of the functions of switching command unit 25, for the function of turning on/off electrical contact 21, switching command unit 25X according to the third embodiment (see Figs. 9A to 9C) is also applicable.

Thus, switchgear 10d according to the fourth embodiment is different from switchgear 10c (see Fig. 7) according to the second embodiment in that current suppression element 30 is composed of energy absorbing element 32 instead of electrical resistance 31. Energy absorbing element 32 is typically composed of a varistor made of ZnO (zinc oxide) or the like. The varistor has non-ohmicity and a voltage difference absorbing capability (i.e., an interrupting capability), as a diode does, and has a voltage-current characteristic according to which a current does not flow even when a voltage difference equal to or smaller than a limit voltage that is a specification value is applied across the varistor.

Alternatively, energy absorbing element 32 may be composed of a thermistor element having a value in electrical resistance increasing as temperature elevates. The thermistor element equivalently has a current interrupting capability as the value in electrical resistance is increased by quantity of heat generated by the energy of an overcurrent.

How opening/closing switch unit 20 in the closing operation of switchgear 10d is controlled is similar to that according to the second embodiment. That is, turning on/off electrical contact 21 and commutation switching unit 22 constituting switch unit 20 can be controlled according to the flowchart of Fig. 8. Further, as described in the second embodiment, the abnormality diagnosis can also be conducted so as to determine whether the current of fault sensing unit 40 falls within the reference current range. In this case, of the functions of switching command unit 25, the function of controlling turning on/off electrical contact 21 can be performed using hardware of switching command unit 25X according to the third embodiment.

Switchgear 10d according to the third embodiment is configured such that nodes N1 and N2 are constantly interconnected via the varistor (or the energy absorbing element), and a current between nodes N1 and N2 can also be interrupted by energy absorbing element 32 when electrical contact 21 and commutation switching unit 22 constituting switch unit 20 are both turned off. In other words, in contrast to switchgear 10c, switchgear 10d, despite the absence of current switching unit 50 of Fig. 1, also has an interrupting function when switch unit 20 is open.

Further, when switch unit 20 performs the closing operation, switchgear 10d conducts an abnormality diagnosis with commutation switching unit 22 alone turned on, and when no abnormality is sensed in the abnormality diagnosis, a steady closed state with electrical contact 21 turned on is established. When an overcurrent is generated by a fault in response to the closing by switch unit 20, commutation switching unit 22 can be turned off to interrupt a fault current. After the interruption, a current passing through switchgear 10d can be interrupted by energy absorbing element 32 (or the varistor).

### Fifth Embodiment

Fig. 11 is a conceptual circuit diagram illustrating a configuration example of a switchgear 10e according to a fifth embodiment.

Referring to Fig. 11, switchgear 10e is different from switchgear 10d (Fig. 10) according to the fourth embodiment in that switch unit 20 is composed of a semiconductor switch 23 alone. Semiconductor switch 23 is connected between nodes N1 and N2, and turned on/off as controlled in response to a control signal issued from switching command unit 25. In switchgear 10e, switch unit 20 can be composed of semiconductor switch 23 alone by controlling semiconductor switch 23 to be turned on/off when a circuit operation is performed.

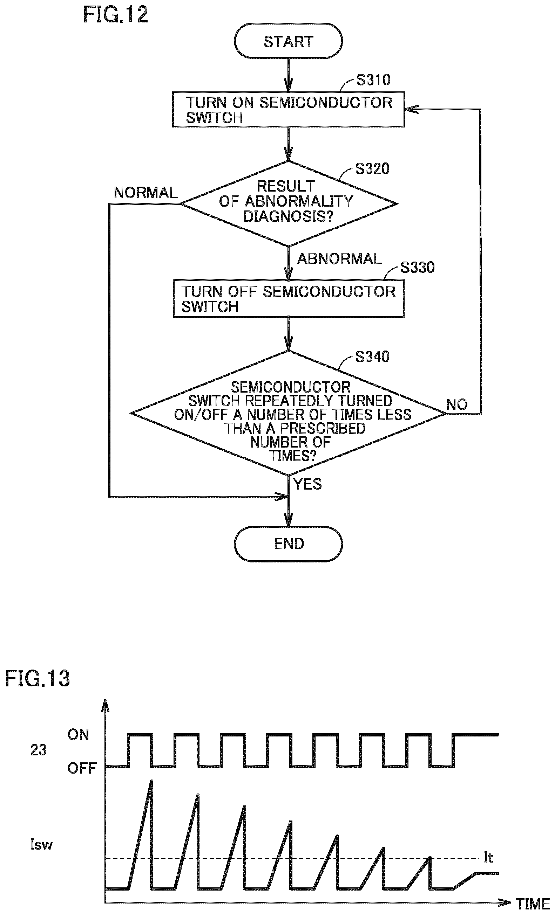

Fig. 12 is a flowchart of an example of a control process when the closing operation of the switchgear is performed according to the fifth embodiment. The Fig. 12 control process is performed, for example by switching command unit 25, when switchgear 10e is instructed to perform the closing operation.

Referring to Fig. 12, when semiconductor switch 23 is turned on in S310, switching command unit 25 conducts an abnormality diagnosis in S320. In S320, a period of time for which semiconductor switch 23 is turned on is provided for a predetermined time length, and during this on period, a current Isw passing through semiconductor switch 23 as sensed by fault sensing unit 40 is compared with a predetermined determination current It. In S320, when Isw ≥ It is sensed during the on period, an abnormal state is sensed.

Switching command unit 25 branches the step of S320 at a point in time when the on period ends. When an abnormal state is sensed during the on period of semiconductor switch 23, the process proceeds to S330, and semiconductor switch 23 is turned off in order to provide a period of time for which semiconductor switch 23 is turned off. Thereby, passing current Isw is once interrupted. Thus, in the fifth embodiment, an abnormality diagnosis is conducted in such a manner that semiconductor switch 23 is repeatedly turned on/off. That is, in the control process of Fig. 12, switching command unit 25 generates a control signal to repeatedly turn on/off semiconductor switch 23 to establish the "first state" between nodes N1 and N2.

In response to semiconductor switch 23 being turned off in S330, switching command unit 25 counts how many times semiconductor switch 23 is repeatedly turned on/off for abnormality diagnosis, and the switching command unit in S340 determines whether semiconductor switch 23 is repeatedly turned on/off a number of times less than a prescribed number of times. Until the semiconductor switch is repeatedly turned on/off the prescribed number of times, the steps of S310 to S340 are repeated. Typically, semiconductor switch 23 can be repeatedly turned on/off with a fixed switching period and a fixed ratio of the on period to the switching period (or a fixed duty ratio). Alternatively, as a large current flows at the time of activation, the switching period can be set to be a minimum at the time of activation and gradually increased in length.

When passing current Isw in the on period of semiconductor switch 23 no longer rises above determination current It before the semiconductor switch is repeatedly turned on/off the prescribed number of times, that is, when no abnormal state is sensed in the abnormality diagnosis in S320, switching command unit 25 skips the steps in S330 and S340 and ends the closing operation of switchgear 10e. Thereby, semiconductor switch 23 is kept turned on and the closing operation is terminated, and a steady closed state by switchgear 10e is established. That is, in the control process of Fig. 12, switching command unit 25 generates a control signal to keep semiconductor switch 23 turned on to establish between nodes N1 and N2 the "second state" with an equivalent impedance smaller than the "first state."

In contrast, when the semiconductor switch is repeatedly turned on/off the prescribed number of times, and passing current Isw in the on period of semiconductor switch 23 is equal to or larger than determination current It, that is, when an abnormal state is continuously sensed, a determination of YES is made in S340, and the closing operation of switchgear 10e is terminated with semiconductor switch 23 kept turned off. That is, as an abnormal state has occurred, the closing operation is terminated with semiconductor switch 23 turned off.

Fig. 13 shows an example of an operation waveform diagram of the semiconductor switch in the switchgear according to the fifth embodiment.

Referring to Fig. 13, with an abnormality diagnosis conducted while semiconductor switch 23 is repeatedly turned on/off, even when an abnormality such as a short circuit occurs, semiconductor switch 23 is turned off while passing current Isw increases, and a large current passing when the closing operation is performed can be prevented.

Further, a load circuit such as a motor has a low load impedance when it is activated, that is, for a low rotation speed, and as the rotation speed increases the load impedance increases, and a current passing through the switchgear also decreases phenomenally. In this case, a large inrush current is generated even in a normal state without an abnormality such as a short circuit. In a normal state, an overcurrent state due to an inrush current is eliminated as time elapses, whereas when an abnormality occurs, the overcurrent state will continue.

Accordingly, the prescribed number of times in S340 of Fig. 12 can be determined in advance in accordance with a waiting period of time corresponding to a time length for which the inrush current is eliminated in the normal state, that is, in accordance with a characteristic of the load circuit (not shown) connected to node N2. When switchgear 10d is disposed for a load circuit which has no inrush current generated and a starting current which is not so large, the closing operation can be completed early by reducing the prescribed number of times.

By setting the prescribed number of times in this manner, for the inrush current in the normal state, switchgear 10e can be brought to the steady closed state after the inrush current has been eliminated. When this is done, semiconductor switch 23 can also be turned on/off to suppress the inrush current in magnitude. In contrast, when an overcurrent due to an abnormality such as a short circuit is generated, an abnormality diagnosis is conducted so as to open switchgear 10e. The prescribed number of times can be determined from the waiting period of time according to the characteristic of the load circuit as described above, and the switching period of semiconductor switch 23 in the abnormality diagnosis. Accordingly, for the sake of confirmation, comparing how many times turning on/off is repeated with the prescribed number of times in step S340 is described as being equivalent to comparing a period of time elapsing from starting the closing operation with the waiting period of time.

As described above, switchgear 10e of the fifth embodiment allows a closing operation to be performed with an abnormality diagnosis accompanied to appropriately sense an abnormal state when a load circuit having a characteristic causing a large starting current is connected to a power source,. Further, a current passing through switchgear 10e during the closing operation, including the starting current during the normal operation, can be suppressed, and an effect of device protection can be increased.

The abnormality diagnosis with semiconductor switch 23 repeatedly turned on/off as described in the fifth embodiment (see Figs. 12 and 13) is also applicable to the abnormality diagnosis conducted in switchgear 10d (Fig. 10) according to the fourth embodiment when commutation switching unit 22 is composed of a semiconductor switch and commutation switching unit 22 (the semiconductor switch) is turned on while electrical contact 21 is turned off, which corresponds to S210 and S220 in Fig. 8.

It should be understood that the embodiments disclosed herein are illustrative and not restrictive in any respect. The scope of the present disclosure is defined by the terms of the claims, rather than the above description, and is intended to encompass any modification within the meaning and scope equivalent to the claims.

### REFERENCE SIGNS LIST

10a-10e switchgear, 20 switch unit, 21 electrical contact, 22, 22X commutation switching unit, 23 semiconductor switch, 25, 25X switching command unit, 30 current suppression element, 31 electrical resistance, 32 energy absorbing element, 40 fault sensing unit, 50 current switching unit, 111 casing, 112 movable electrode, 113 fixed electrode, 114 heat-resistant contact, 115-117 terminal, 118 electrode operating unit, 120 arc chute, 121A, 121B arc runner, 122 arc extinguishing unit, 201-203 iron core, 202# thin-walled portion, 204 coil, 205 coupling rod, 210 biasing force, 211, 212 driving force, 221, 222 attractive force, 250A, 250B magnetic path, Isw passing current (through the semiconductor switch), It determination current, N1 and N2 node.

## Claims

1. A switchgear comprising:
a switch unit connected between a first node electrically connected to a power source and a second node electrically connected to a load circuit which receives power supplied from the power source;
a current suppression element connected between the first node and the second node in parallel to the switch unit;
a fault sensing unit to sense an abnormality in an electrically conducting circuit which is formed by electrically interconnecting the first node and the second node and includes the power source and the load circuit; and
a switching command unit to control opening/closing the switch unit, wherein
when a closing operation of the switchgear is performed, the switching command unit controls the switch unit to establish a first state in which an impedance between the first node and the second node has a first value, and the switching command unit conducts an abnormality diagnosis based on an output of the fault sensing unit, and when no abnormal state is sensed by the fault sensing unit in the abnormality diagnosis, the switching command unit controls the switch unit to establish a second state in which the impedance has a second value equal to or smaller than the first value.

2. The switchgear according to claim 1, the current suppression element being an electrical resistance to limit a current, the switchgear further comprising:
a current switching unit connected between the switch unit and the second node and opened and closed as controlled by the switching command unit, wherein
the switch unit is composed of an electrical contact or a commutation switching unit, and
the switching command unit turns off the switch unit and turns on the current switching unit to establish the first state, and conducts a first abnormality diagnosis, the switching command unit further turns on the switch unit and conducts a second abnormality diagnosis when no abnormal state is sensed by the fault sensing unit in the first abnormality diagnosis, and the switching command unit keeps the current switching unit and the switch unit turned on to establish the second state when the abnormal state is not sensed by the fault sensing unit in the second abnormality diagnosis.

3. The switchgear according to claim 2, wherein the switching command unit turns off the current switching unit and keeps the switch unit turned off to terminate the closing operation when the abnormal state is sensed by the fault sensing unit in the first abnormality diagnosis, and the switching command unit turns off the current switching unit and the switch unit to terminate the closing operation when the abnormal state is sensed by the fault sensing unit in the second abnormality diagnosis.

4. The switchgear according to claim 1, the current suppression element being an electrical resistance to limit a current, the switchgear further comprising:
a current switching unit connected between the switch unit and the second node and opened and closed as controlled by the switching command unit, wherein
the switch unit includes a commutation switching unit and an electrical contact connected in parallel,
the commutation switching unit has a larger interrupting capacity than the electrical contact, and an impedance of the electrical contact in an on state is equal to or smaller than an impedance of the commutation switching unit in an on state, and
the switching command unit in the first state turns on the current switching unit and turns off the commutation switching unit and the electrical contact in the switch unit, and conducts a first abnormality diagnosis, the switching command unit turns on the commutation switching unit in the switch unit and keeps turned off the electrical contact in the switch unit, and conducts a second abnormality diagnosis when the abnormal state is not sensed by the fault sensing unit in the first abnormality diagnosis, and the switching command unit turns on the current switching unit and the electrical contact to establish the second state when the abnormal state is not sensed by the fault sensing unit in the second abnormality diagnosis.

5. The switchgear according to claim 4, wherein the switching command unit turns off the current switching unit and keeps turned off the commutation switching unit and the electrical contact in the switch unit to terminate the closing operation when the abnormal state is sensed by the fault sensing unit in the first abnormality diagnosis, and the switching command unit turns off the current switching unit and the commutation switching unit and keeps the electrical contact turned off to terminate the closing operation when the abnormal state is sensed by the fault sensing unit in the second abnormality diagnosis.

6. The switchgear according to claim 1, wherein
the current suppression element is an electrical resistance to limit a current,
the switch unit includes a commutation switching unit and an electrical contact connected in parallel,
the commutation switching unit has a larger interrupting capacity than the electrical contact, and an impedance of the electrical contact in an on state is equal to or smaller than an impedance of the commutation switching unit in an on state, and
the switching command unit in the first state turns on the commutation switching unit and turns off the electrical contact, and conducts the abnormality diagnosis, and the switching command unit turns on the electrical contact to establish the second state when the abnormal state is not sensed by the fault sensing unit in the abnormality diagnosis.

7. The switchgear according to claim 1, wherein
the current suppression element is an energy absorbing element having an interrupting capability,
the switch unit includes a commutation switching unit and an electrical contact connected in parallel,
the commutation switching unit has a larger interrupting capacity than the electrical contact, and an impedance of the electrical contact in an on state is equal to or smaller than an impedance of the commutation switching unit in an on state, and
the switching command unit in the first state turns on the commutation switching unit and turns off the electrical contact, and conducts the abnormality diagnosis, and the switching command unit turns on the electrical contact to establish the second state when the abnormal state is not sensed by the fault sensing unit in the abnormality diagnosis.

8. The switchgear according to claim 6 or 7, wherein the switching command unit turns off the commutation switching unit and keeps the electrical contact turned off to terminate the closing operation when the abnormal state is sensed by the fault sensing unit in the abnormality diagnosis.

9. The switchgear according to claim 7, wherein
the commutation switching unit is composed of a semiconductor switch turned on/off as controlled by the switching command unit, and
the switching command unit in the first state turns off the electrical contact and repeatedly turns on/off the semiconductor switch, and conducts the abnormality diagnosis, and the switching command unit turns on the electrical contact and keeps the semiconductor switch turned on to establish the second state when the abnormal state is no longer sensed by the fault sensing unit for an on period of the semiconductor switch before the semiconductor switch is repeatedly turned on/off a predetermined prescribed number of times.

10. The switchgear according to claim 1, wherein
the current suppression element is an energy absorbing element having an interrupting capability,
the switch unit is composed of a semiconductor switch turned on/off as controlled by the switching command unit, and
the switching command unit in the first state repeatedly turns on/off the semiconductor switch and conducts the abnormality diagnosis, and the switching command unit keeps the semiconductor switch turned on to establish the second state when the abnormal state is no longer sensed by the fault sensing unit for an on period of the semiconductor switch before the semiconductor switch is repeatedly turned on/off a predetermined prescribed number of times.

11. The switchgear according to claim 2 or 3, wherein the commutation switching unit includes:
a heat-resistant contact; and
an arc chute to extinguish an arc generated at the heat-resistant contact.

12. The switchgear according to any one of claims 4 to 9, wherein the commutation switching unit includes:
a heat-resistant contact formed of a material having a melting point higher than that of the electrical contact; and
an arc chute to extinguish an arc generated at the heat-resistant contact.

13. The switchgear according to any one of claims 1 to 12, wherein the fault sensing unit is disposed to be closer to the second node than the switch unit and the current suppression element are.

14. The switchgear according to any one of claims 1 to 12, wherein the fault sensing unit senses the abnormal state based on measurement information including at least one of: an electrical signal including information of at least one of a current, a voltage, an electrical resistance, and an elevation in temperature in the electrically conducting circuit; a distribution of frequency components of the electrical signal; and optical information.

15. The switchgear according to any one of claims 2 to 6, wherein the fault sensing unit is connected to the electrical resistance to sense the abnormal state based on measurement information including at least one of a quantity of energy absorbed by the electrical resistance and an amount of elevation in temperature at the electrical resistance when the electrically conducting circuit is formed.

16. The switchgear according to claim 14 or 15, wherein the fault sensing unit uses the measurement information, as collected during a normal operation of the electrically conducting circuit, to set a reference range for the measurement information, and senses the abnormal state when the measurement information, as obtained in the abnormality diagnosis, deviates from the reference range.

17. The switchgear according to any one of claims 1 to 8, wherein the switching command unit controls the switch unit to establish the second state when the abnormal state sensed by the fault sensing unit in the abnormality diagnosis is not sensed after a predetermined waiting period of time elapses, whereas the switching command unit opens the switch unit to terminate the closing operation when the abnormal state is not sensed after the waiting period of time elapses.

18. The switchgear according to any one of claims 4 to 7, wherein
the fault sensing unit senses the abnormal state when a passing current at the fault sensing unit is larger than a predetermined reference current range, and
the switching command unit uses an electromagnetic force generated from an electromagnet including a coil receiving the passing current to generate a first driving force in a direction to turn on the electrical contact when the passing current falls within the reference current range, and a second driving force in a direction to turn off the electrical contact when the passing current is larger than the reference current range.

19. The switchgear according to claim 18, wherein
a biasing force acts on the electrical contact to turn off the electrical contact,
the first driving force acts in a direction opposite to the biasing force and is larger than the biasing force, and
the switching command unit avoids generating the first driving force when the passing current is smaller than the reference current range.

20. The switchgear according to claim 18 or 19, wherein
the electromagnet includes:
first and second iron cores disposed with a first gap therebetween; and
a third iron core disposed in a direction opposite to the first iron core and forming a second gap with the second iron core,
the first and third iron cores are coupled by a coupling rod, and are disposed to be integrally movable with respect to the second iron core, which is fixed, by the first or second driving force,
the electrical contact turns on when the first and second iron cores are brought into contact with each other, and the electrical contact turns off when the first and second iron cores are out of contact with each other, and
the electromagnet generates the first driving force by forming a first magnetic path to drive the first iron core in a direction to reduce the first gap when the passing current falls within the reference current range, whereas the electromagnet generates the second driving force by forming a second magnetic path to drive the third iron core in a direction to reduce the second gap in response to magnetic saturation being caused in the first magnetic path when the passing current is larger than the reference current range.

21. A method for controlling a switchgear disposed between a first node electrically connected to a power source and a second node electrically connected to a load circuit which receives power supplied from the power source, comprising:
when a closing operation of the switchgear is performed, controlling a switch unit connected between the first node and the second node in parallel to a current suppression element to establish a first state in which an impedance between the first node and the second node has a first value;
conducting an abnormality diagnosis in the first state to sense an abnormal state in an electrically conducting circuit which is formed by electrically interconnecting the first node and the second node and includes the power source and the load circuit;
when the abnormal state is not sensed in the abnormality diagnosis, controlling the switch unit to establish a second state in which the impedance has a second value equal to or smaller than the first value; and
when the abnormal state is sensed in the abnormality diagnosis, opening the switch unit.

22. The switchgear according to claim 21, wherein
the current suppression element is an electrical resistance to limit a current,
the switchgear further includes a current switching unit connected between the switch unit and the second node,
the switch unit is composed of an electrical contact or a continuous flow switching unit,
the first state is established by turning off the switch unit and turning on the current switching unit,
the abnormality diagnosis includes
a first abnormality diagnosis conducted while the first state is established, and
a second abnormality diagnosis conducted while the switch unit is further turned on when the abnormal state is not sensed in the first abnormality diagnosis, and
the second state is established by keeping the current switching unit and the switch unit turned on when the abnormal state is not sensed in the second abnormality diagnosis.

23. The switchgear according to claim 22, further comprising:
when the abnormal state is sensed in the first abnormality diagnosis, turning off the current switching unit and keeping the switch unit turned off to terminate the closing operation, and
when the abnormal state is sensed in the second abnormality diagnosis, turning off the current switching unit and the switch unit to terminate the closing operation.

24. The switchgear according to claim 21, wherein
the current suppression element is an electrical resistance to limit a current,
the switchgear further includes a current switching unit connected between the switch unit and the second node,
the switch unit includes a commutation switching unit and an electrical contact connected in parallel,
the commutation switching unit has a larger interrupting capacity than the electrical contact, and an impedance of the electrical contact in an on state is equal to or smaller than an impedance of the commutation switching unit in an on state,
the first state is established by turning on the current switching unit and turning off the commutation switching unit and the electrical contact in the switch unit,
the abnormality diagnosis includes
a first abnormality diagnosis conducted while the first state is established, and
a second abnormality diagnosis conducted while in the switch unit the commutation switching unit is turned on and the electrical contact is kept turned off when the abnormal state is not sensed in the first abnormality diagnosis, and
the second state is established by turning on the current switching unit and the electrical contact when the abnormal state is not sensed in the second abnormality diagnosis.

25. The switchgear according to claim 24, further comprising:
when the abnormal state is sensed in the first abnormality diagnosis, turning off the current switching unit and keeping turned off the commutation switching unit and the electrical contact in the switch unit to terminate the closing operation; and
when the abnormal state is sensed in the second abnormality diagnosis, turning off the current switching unit and the commutation switching unit and keeping the electrical contact turned off to terminate the closing operation.

26. The switchgear according to claim 21, wherein
the current suppression element is an electrical resistance to limit a current,
the switch unit includes a commutation switching unit and an electrical contact connected in parallel,
the commutation switching unit has a larger interrupting capacity than the electrical contact, and an impedance of the electrical contact in an on state is equal to or smaller than an impedance of the commutation switching unit in an on state,
the first state is established by turning on the commutation switching unit and turning off the electrical contact, and
the second state is established by turning on the electrical contact when the abnormal state is not sensed in the abnormality diagnosis.

27. The switchgear according to claim 21, wherein
the current suppression element is an energy absorbing element having an interrupting capability,
the switch unit includes a commutation switching unit and an electrical contact connected in parallel,
the commutation switching unit has a larger interrupting capacity than the electrical contact, and an impedance of the electrical contact in an on state is equal to or smaller than an impedance of the commutation switching unit in an on state,
the first state is established by turning on the commutation switching unit and turning off the electrical contact, and
the second state is established by turning on the electrical contact when the abnormal state is not sensed in the abnormality diagnosis.

28. The switchgear according to claim 26 or 27, further comprising turning off the commutation switching unit and keeping the electrical contact turned off to terminate the closing operation when the abnormal state is sensed in the abnormality diagnosis.

29. The switchgear according to claim 27, wherein
the commutation switching unit is composed of a semiconductor switch turned on/off as controlled by a control signal,
the first state is established by generating the control signal to repeatedly turn on/off the semiconductor switch while turning off the electrical contact, and
the second state is established by generating the control signal to keep the semiconductor switch turned on while turning on the electrical contact when the abnormal state is no longer sensed for an on period of the semiconductor switch before the semiconductor switch is repeatedly turned on/off a predetermined prescribed number of times.

30. The switchgear according to claim 21, wherein
the current suppression element is an energy absorbing element having an interrupting capability,
the switch unit is composed of a semiconductor switch turned on/off as controlled by a control signal,
the first state is established by generating the control signal to repeatedly turn on/off the semiconductor switch, and
the second state is established by generating the control signal to keep the semiconductor switch turned on when the abnormal state is no longer sensed for an on period of the semiconductor switch before the semiconductor switch is repeatedly turned on/off a predetermined prescribed number of times.
